(19) Europäisches Patentamt / European Patent Office / Office européen des brevets

(11) **EP 4 063 441 A1**

(12) **EUROPEAN PATENT APPLICATION**
published in accordance with Art. 153(4) EPC

(43) Date of publication:
**28.09.2022 Bulletin 2022/39**

(21) Application number: **20890248.6**

(22) Date of filing: **16.11.2020**

(51) International Patent Classification (IPC):
**C08J 9/16** (2006.01)     **C08F 10/06** (2006.01)
**C08L 23/00** (2006.01)

(52) Cooperative Patent Classification (CPC):
**C08F 10/06; C08J 9/16; C08L 23/00**

(86) International application number:
**PCT/JP2020/042567**

(87) International publication number:
**WO 2021/100645 (27.05.2021 Gazette 2021/21)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **21.11.2019 JP 2019210651**

(71) Applicant: **Kaneka Corporation**
**Osaka-shi, Osaka 530-8288 (JP)**

(72) Inventor: **NAKAYAMA Kiyotaka**
**Settsu-shi, Osaka 566-0072 (JP)**

(74) Representative: **Vossius & Partner**
**Patentanwälte Rechtsanwälte mbB**
**Siebertstraße 3**
**81675 München (DE)**

(54) **POLYPROPYLENE RESIN FOAM PARTICLES, METHOD FOR PRODUCING SAME, AND POLYPROPYLENE RESIN FOAM MOLDED ARTICLE**

(57) The present invention relates to polypropylene resin expanded particles containing a base resin that contains a polypropylene resin as a main component. The polypropylene resin expanded particles have a single melting peak in a temperature range from 130°C to 170°C and a melting heat amount in the temperature range from 130°C to 170°C of 90% or more of a total melting heat amount in first heating in differential scanning calorimetry. The polypropylene resin expanded particles have a melting point Tm, which is a melting peak value in second heating in differential scanning calorimetry, of 159°C or higher and 170°C or lower; a melt fracture speed at 200°C of 5 m/minute or more and 45 m/minute or less; and an open cell ratio of 15% or less. Thus, the present invention provides polypropylene resin expanded particles that can produce polypropylene resin foam molded articles having high heat resistance and good moldability, a method for producing the same, and polypropylene resin foam molded articles using the same.

FIG. 1

**Description**

Technical Field

The present invention relates to polypropylene resin expanded particles, a method for producing the same, and a polypropylene resin foam molded article using the same.

Background Art

Polypropylene resin expanded particles are formed into in-mold foam molded articles by being filled into a mold and heated with steam. The in-mold foam molded articles thus obtained have advantages of arbitrary shape, lightweight, heat insulating properties, etc. Because of these characteristics, the in-mold foam molded articles obtained using the polypropylene resin expanded particles have been used for various purposes, including heat insulating materials, cushioning packaging materials, automotive interior materials, and automotive bumper cores.

For example, Patent Document 1 discloses polypropylene resin pre-expanded particles containing a polypropylene resin having a melt flow rate (also called a melt index) of 3 g/10 minutes or more and 20 g/10 minutes or less as the base resin, having an expansion ratio of 5 times or more and 45 times or less, and having two melting points in the measurement using a differential scanning calorimeter, the melting point on the high temperature side being 150°C or higher and the melting point on the low temperature side being less than 137°C.

Patent Document 2 discloses polypropylene resin pre-expanded particles containing 85 to 99 mass% of a polypropylene resin as the base resin and a hydrophilic compound, the polypropylene resin having a melt flow rate of 3 g/10 minutes or more and 20 g/10 minutes or less and a melting point of 145°C or higher and 165°C or lower. Patent Document 2 indicates that the polypropylene resin pre-expanded particles have two or more peaks of melting heat amount.

Patent Documents 3 discloses polypropylene resin pre-expanded particles using a modified polypropylene resin that satisfies a predetermined relational expression between a loss tangent $\tan\delta$ at an angular frequency of 0.1 rad/s in dynamic viscoelastic measurement at 200°C and a melt fracture take-up speed at 200°C.

Propylene homopolymers are preferably used as the base resin to improve the heat resistance of polypropylene resin foam molded articles. For example, Patent Document 4 proposes polypropylene resin expanded particles containing as the base resin a polypropylene resin having a melting point of 155°C or higher, a tensile yield strength of 31 MPa or more, a tensile fracture elongation of 20% or more, and a molecular weight distribution (Mw/Mn) of 4.4 or more.

Patent Document 5 proposes polypropylene resin expanded particles obtained by expanding, to 10 times or more, a resin composition containing a linear polypropylene resin as a main component and having a melt tension at 230°C of 5 to 30 g with use of a blowing agent containing at least carbon dioxide in a supercritical state; and cutting resultant strands into particles.

Prior Art Documents

Patent Documents

    Patent Document 1: WO 2009/051035 A1
    Patent Document 2: WO 2017/030124 A1
    Patent Document 3: WO 2018/016399 A1
    Patent Document 4: JP 2003-313353 A
    Patent Document 5: JP 2007-308560 A

Disclosure of Invention

Problem to be Solved by the Invention

Polypropylene resin foam molded articles are becoming widely used particularly in automotive purposes, mainly to reduce the weight of vehicles. However, the polypropylene resin foam molded articles using the polypropylene resin expanded particles described in the cited documents 1 to 3 shrink by heat when exposed to high temperatures in the vicinity of an engine or the like and are difficult to withstand repeated use. Therefore, there has been a demand for foam molded articles having improved heat resistance, specifically foam molded articles that hardly shrink by heat in a temperature range from 130°C to 140°C.

Expanded particles containing a high-melting-point polypropylene resin such as a propylene homopolymer as the base resin require a very high molding pressure and are difficult to be molded by normal molding machines. Patent Document 4 uses an organic peroxide treatment in an autoclave to reduce the molding pressure. However, if the expansion temperature is high and the temperature is raised with steam, the temperature may not reach the expansion temperature, making the mass production difficult. Oil temperature rise takes time to raise and lower the temperature, prolonging the production cycle and reducing the productivity. Producing polypropylene resin expanded particles by the extrusion expansion technique as proposed by the cited document 5 may result in open cells in expanded particles (increasing the open cell ratio), which may deteriorate the moldability.

The present invention has been made in view of the above problems and provides polypropylene resin expanded particles that can produce polypropylene resin foam molded articles having high heat resistance and good moldability, a method for producing the same, and polypropylene resin foam molded articles using the same.

Means for Solving Problem

One or more embodiments of the present invention relates to polypropylene resin expanded particles containing a base resin that contains a polypropylene resin as a main component. The polypropylene resin expanded particles have a single melting peak in a temperature range from 130°C to 170°C and a melting heat amount in the temperature range from 130°C to 170°C of 90% or more of a total melting heat amount in first heating in differential scanning calorimetry. The polypropylene resin expanded particles have a melting point Tm2 of 159°C or higher and 170°C or lower, the melting point Tm2 being a melting peak value in second heating in differential scanning calorimetry. The polypropylene resin expanded particles have a melt fracture speed at 200°C of 5 m/minute or more and 45 m/minute or less, and the polypropylene resin expanded particles have an open cell ratio of 15% or less.

One or more embodiments of the present invention relates to a method for producing the polypropylene resin expanded particles, including: melt-kneading a base resin containing a polypropylene resin as a main component and a blowing agent and extruding the melt; and cutting the extruded melt to obtain polypropylene resin expanded particles. The melt-kneading includes a first stage and a second stage, and a temperature of the second stage is lower than a temperature of the first stage.

One or more embodiments of the present invention relates to a polypropylene resin foam molded article composed of the polypropylene resin expanded particles.

Effect of the Invention

The present invention provides polypropylene resin expanded particles that can produce polypropylene resin foam molded articles having high heat resistance and good moldability.

The production method of the polypropylene resin expanded particles of the present invention enables simple and efficient production of polypropylene resin expanded particles that can produce polypropylene resin foam molded articles having high heat resistance and good moldability.

The present invention also provides polypropylene resin foam molded articles having good heat resistance.

Brief Description of Drawings

[FIG. 1] FIG. 1 is an explanatory view illustrating the proportion of the melting heat amount (melting heat amount ratio) in the temperature range from 130°C to 170°C to the total melting heat amount on a differential scanning calorimetry curve (DSC curve) of polypropylene resin expanded particles in one or more embodiments of the present invention, obtained in the first heating in differential scanning calorimetry.

[FIG. 2] FIG. 2 is a DSC curve of polypropylene resin expanded particles of Example 1 obtained in the first heating in differential scanning calorimetry.

Description of the Invention

The present inventor conducted extensive research to solve the above problems. As a result, it was found that polypropylene resin foam molded articles (hereinafter, also referred to as "foam molded articles" simply) using polypropylene resin expanded particles (hereinafter, also referred to as "expanded particles" simply) that satisfy the following have improved heat resistance and good moldability: the polypropylene resin expanded particles containing a base resin that contains a polypropylene resin as a main component; having a single melting peak (hereinafter, the melting peak also called Tm1) in the temperature range from 130°C to 170°C and a melting heat amount in the temperature range from 130°C to 170°C of 90% or more of the total melting heat amount (hereinafter, also referred to as a "melting heat amount ratio" simply) in the first heating in differential scanning calorimetry; having a melting point Tm2, which is a melting peak value in second heating in differential scanning calorimetry, of 159°C or higher and 170°C or lower; having a melt fracture speed at 200°C of 5 m/minute or more and 45 m/minute or less; and having an open cell ratio of 15% or less.

In one or more embodiments of the present invention, the differential scanning calorimetry curve (DSC curve) of the polypropylene resin expanded particles refers to an entire DSC curve that is obtained by heating the polypropylene resin expanded particles from 40°C to 300°C at a rate of 10°C/minute for melting, followed by cooling from 300°C to 40°C at a rate of 10°C/minute for crystallization, and again heating from 40°C to 300°C at a rate of 10°C/minute (i.e., the first heating -> cooling -> the second heating) using a differential scanning calorimeter. The differential scanning calorimeter may be a DSC6200 model manufactured by Seiko Instruments Inc., for example. The measurement of the differential scanning calorimetry curve may use foam molded articles instead of expanded particles, as samples.

The polypropylene resin expanded particles in one or more embodiments of the present invention have a single melting peak in the temperature range from 130°C to 170°C on the DSC curve obtained in the first heating, and the melting peak temperature is the melting point Tm1. Usually, polypropylene resin expanded particles produced by the extrusion expansion technique have a single melting peak in the temperature range from 130°C to 170°C on the DSC curve in the first heating, except for the case of using blended resins that are less compatible with each other.

In one or more embodiments of the present invention, the polypropylene resin expanded particles have a melting heat amount in the temperature range from 130°C to 170°C of 90% or more, preferably 92% or more, more preferably 92.5% or more, further preferably 93% or more, and particularly preferably 93.5% or more, of the total melting heat amount on the DSC curve obtained in the first heating. Polypropylene resin expanded particles having the above range of the melting heat amount ratio in the temperature range from 130°C to 170°C can produce foam molded articles having good heat resistance and moldability. If the melting heat amount ratio increases in the temperature range below 130°C, the heat resistance may deteriorate, whereas if the melting heat amount ratio increases in the temperature range above 170°C, the moldability may deteriorate. Although not particularly limited, the polypropylene resin expanded particles may have a melting heat amount in the temperature range from 130°C to 170°C of 100% or less, or 97% or less, of the total melting heat amount on the DSC curve obtained in the first heating, from the viewpoint of improving the heat resistance, for example.

In one or more embodiments of the present invention, the melting heat amount ratio in the temperature range from 130°C to 170° on the DSC curve obtained in the first heating may be calculated as described below.

<Melting heat amount ratio>

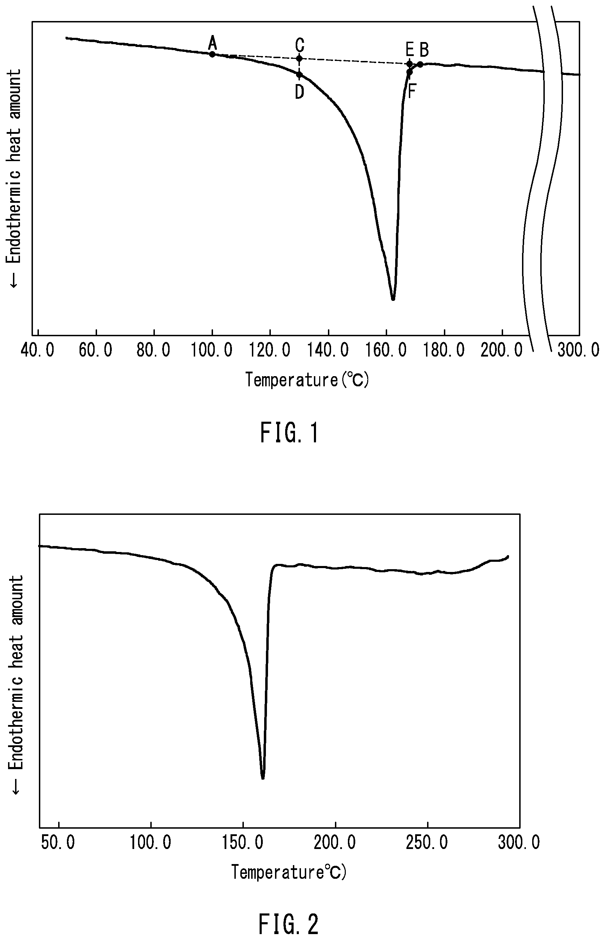

As shown in FIG. 1, a line segment AB is drawn that connects a point (point A) corresponding to 100°C and a melting end point (point B) on the DSC curve in the first heating. A melting heat amount of an area enclosed by the line segment AB and the DSC curve is calculated as a total melting heat amount Q1. A straight line is drawn in parallel to the Y axis from a point (point C) on the line segment AB corresponding to 130°C onto the DSC curve, and an intersection of the straight line and the DSC curve is defined as a point D. Similarly, a straight line is drawn in parallel to the Y axis from a point (point E) on the line segment AB corresponding to 170°C onto the DSC curve, and an intersection of the straight line and the DSC curve is defined as a point F. A melting heat amount of an area enclosed by a line segment CD, a line segment CE, a line segment EF, and the DSC curve is calculated as a melting heat amount Q2 in the temperature range from 130°C to 170°C. If the melting end temperature is less than 170°C, a melting heat amount enclosed by the line segment CD, a line segment CB, and the DSC curve is calculated as a melting heat amount Q2. The melting heat amount ratio is calculated by the following formula using Q1 and Q2. If a peak derived from a resin different from the polypropylene resin is present within the range of Q1, the melting heat amount of the resin is also included in Q1.

$$\text{Melting heat amount ratio (\%)} = Q2 \times 100 \, / \, Q1$$

If a melting peak derived from a resin different from the polypropylene resin is present independently outside the range of Q1 on the DSC curve, the melting heat amount of the melting peak is separately calculated as a melting heat amount Q3. Then, the melting heat amount ratio is calculated by the following formula using Q1, Q2, and Q3.

$$\text{Melting heat amount ratio (\%)} = Q2 \times 100 \, / \, (Q1 + Q3)$$

In one or more embodiments of the present invention, the melting peak temperature on the DSC curve in the second heating of the polypropylene resin expanded particles represents the melting point Tm2, and Tm2 is from 159°C or higher and 170°C or lower. Polypropylene resin expanded particles having a Tm2 of 159°C or higher can produce foam molded articles having high heat resistance, specifically foam molded articles having a low shrinkage ratio at 140°C, for example. The melting point Tm2 of the polypropylene resin expanded particles is preferably160°C or higher, and more preferably 161°C or higher. Polypropylene resin expanded particles having a Tm2 of 170°C or lower can reduce the steam pressure during in-mold foam molding. The melting point Tm2 of the polypropylene resin expanded particles is preferably 165°C or lower. Polypropylene resin expanded particles having a too high melting point Tm2 require a very high steam pressure to obtain favorable molded articles in the in-mold foam molding and are difficult to be molded by normal molding machines for polypropylene resin expanded particles.

In one or more embodiments of the present invention, the polypropylene resin expanded particles have an open cell ratio of 15% or less, preferably 13% or less, more preferably 11% or less, and further preferably 10% or less. Expanded particles having the above range of the open cell ratio improve the moldability, and resultant foam molded articles are less likely to shrink and have an improved static compressive strength. Although not particularly limited, the polypropylene resin expanded particles have an open cell ratio of 0% or more, or 3% or more, for example.

In one or more embodiments of the present invention, the polypropylene resin expanded particles have a melt fracture speed at 200°C (hereinafter, also referred to as a "melt fracture speed" simply) of 5 m/minute or more and 45 m/minute or less. Expanded particles having the above range of the melt fracture speed can reduce an open cell ratio, thus improving the moldability. The expanded particles have a melt fracture speed of preferably 43.5 m/minute or less, more preferably 42 m/minute or less, and further preferably 40.5 m/minute or less. The expanded particles have a melt fracture speed of preferably 10 m/minute or more, and more preferably 20 m/minute or more.

In one or more embodiments of the present invention, the melt fracture speed at 200°C of the polypropylene resin expanded particles can be measured using a sample obtained by forming the expanded particles or foam molded article into a resin lump. The measurement may use either the expanded particles or foam molded article, because the resin physical properties are the same.

<Formation of sample (resin lump)>

The expanded particles are placed in a dryer, the temperature of which is adjusted to Tm2 + 10°C based on the melting point Tm2 of the expanded particles. The pressure inside the dryer is reduced to -0.05 MPa (gauge pressure) to -0.10 MPa (gauge pressure) for 5 to 10 minutes by a vacuum pump, and the expanded particles are left in the dryer for 30 minutes to remove air inside the expanded particles to obtain a resin lump. If the resin sticks to each other and the lump is large, the resin lump may be finely cut with scissors or the like or pulverized with a mixer or the like.

In the case of the foam molded article, the molded article is finely cut with scissors, a slicer, or the like, and then pulverized with a mixer or the like. The fragments of the pulverized foam molded article are placed in a dryer, the temperature of which is adjusted to Tm2 + 10°C based on the melting point Tm2 of the expanded particles. The pressure inside the dryer is reduced to -0.05 MPa (gauge pressure) to -0.10 MPa (gauge pressure) for 5 to 10 minutes by a vacuum pump, and the fragments are left in the dryer for 30 minutes to remove air inside the foam molded article to obtain a resin lump. If the resin sticks to each other and the lump is large, the resin lump may be finely cut with scissors or the like or pulverized with a mixer or the like.

In one or more embodiments of the present invention, the polypropylene resin expanded particles have a melt flow rate (MFR) of preferably 1 g/10 minutes or more and 10 g/10 minutes or less, more preferably 2 g/10 minutes or more and 9 g/10 minutes or less, further preferably 3 g/10 minutes or more and 8 g/10 minutes or less, and particularly preferably 4 g/10 minutes or more and to 7 g/10 minutes or less. Polypropylene resin expanded particles having the above range of the MFR improve the aesthetic quality of the surface of resultant foam molded articles and enhance productivity.

In one or more embodiments of the present invention, the MFR can be measured in conformity with the prescriptions of the method B of JIS K 7210 under the condition that the orifice diameter is 2.0959 ± 0.005 mm, the orifice length is 8.000 ± 0.025 mm, the temperature is 230°C, and the load is 2.16 kg. The MFR of the polypropylene resin expanded particles is measured using a sample obtained by forming the expanded particles or foam molded article into a resin lump.

In one or more embodiments of the present invention, the polypropylene resin expanded particles have a melt tension of preferably 4.5 cN or more, more preferably 5.0 cN or more, further preferably 5.5 cN or more, and particularly preferably 6.0 cN or more. Expanded particles having the above range of the melt tension are likely to have a low open cell ratio, thus improving the moldability. On the other hand, from the viewpoint of the work efficiency in the extrusion expansion, the polypropylene resin expanded particles have a melt tension of preferably 30 cN or less, and more preferably 25 cN or less. The melt tension of the polypropylene resin expanded particles can be measured using a sample obtained by forming the expanded particles or foam molded article into a resin lump, in accordance with the method described in the examples.

In one or more embodiments of the present invention, the polypropylene resin expanded particles have a loss tangent tanδ (hereinafter, also referred to as a "tanδ" simply) of preferably 2.0 or more and less than 6.0, more preferably 2.0 or more and 5.5 or less, and further preferably 2.0 or more and 5.0 or less, at an angular frequency of 0.1 rad/s in the dynamic viscoelastic measurement at 200°C. Expanded particles having the above range of the tanδ are likely to have a low open cell ratio, thus improving the moldability. In one or more embodiments of the present invention, the tanδ can be measured using a viscoelastic measuring device ARES manufactured by TA Instruments, for example. Specifically, the tanδ can be measured by the method described in examples.

In the polypropylene resin expanded particles in one or more embodiments of the present invention, the base resin contains a polypropylene resin as a main component. In one or more embodiments of the present invention, "containing a polypropylene resin as a main component" means that the base resin contains the polypropylene resin in an amount of 90 mass% or more, preferably 95 mass% or more, more preferably 97 mass% or more, further preferably 99 mass% or more, and particularly preferably 100 mass%. Since the base resin contains a polypropylene resin as a main component, the expanded particles are likely to have only one melting peak in the temperature range from 130°C to 170°C and a melting heat amount in the temperature range from 130°C to 170°C of 90% or more of the total melting heat amount on the DSC curve in the first heating.

In the base resin in one or more embodiments of the present invention, the polypropylene resin contains a polypropylene resin having a branched structure (hereinafter, also referred to as a "branched polypropylene resin X") in an amount of preferably 60 mass% or more and 100 mass% or less, more preferably 65 mass% or more, and further preferably 70 mass% or more. This makes the expanded particles easily satisfy the above melting point Tm2, melt fracture speed, and open cell ratio.

In the base resin in one or more embodiments of the present invention, the polypropylene resin may contain a linear polypropylene resin in addition to the branched polypropylene resin X. For example, the polypropylene resin may contain a linear polypropylene resin in an amount of 40 mass% or less, 35 mass% or less, or 30 mass% or less. More specifically, in the base resin in one or more embodiments of the present invention, the polypropylene resin preferably contains 60 mass% or more and 100 mass% or less of the branched polypropylene resin X and 0 mass% or more and 40 mass% or less of the linear polypropylene resin, more preferably 65 mass% or more and 100 mass% or less of the branched polypropylene resin X and 0 mass% or more and 35 mass% or less of the linear polypropylene resin, and further preferably 70 mass% or more and 100 mass% or less of the branched polypropylene resin X and 0 mass% or more and 30 mass% or less of the linear polypropylene resin.

Examples of the linear polypropylene resin include crystalline propylene homopolymers, block copolymers, and random copolymers. The propylene copolymers are preferably polymers containing 75 mass% or more of propylene, because such polymers retain characteristics of polypropylene resins such as crystallinity, rigidity, and chemical resistance. Examples of monomers copolymerizable with propylene include: α-olefins having 2 or 4 to 12 carbon atoms such as ethylene, 1-butene, isobutene, 1-pentene, 3-methyl-1-butene, 1-hexene, 4-methyl-1-pentene, 3,4-dimethyl-1-butene, 1-heptene, 3-methyl-1-hexene, 1-octene, and 1-decene; cyclic olefins such as cyclopentene, norbornene, and tetracyclo[6,2,11,8,13,6]-4-dodecene; dienes such as 5-methylene-2-norbornene, 5-ethylidene-2-norbornene, 1,4-hexadiene, methyl-1,4-hexadiene, and 7-methyl-1,6-octadiene; and vinyl monomers such as vinyl chloride, vinylidene chloride, acrylonitrile, vinyl acetate, acrylic acid, methacrylic acid, maleic acid, ethyl acrylate, butyl acrylate, methyl methacrylate, maleic anhydride, styrene, methyl styrene, vinyltoluene, and divinylbenzene. Particularly, ethylene and 1-butene are preferred in terms of improving the resistance to brittleness at low temperatures, inexpensiveness, etc. These may be used individually or in combination of two or more kinds. From the viewpoint of improving the heat resistance of the expanded particles and foam molded articles, at least one of propylene homopolymers or propylene block copolymers is preferred. The propylene block copolymers are preferably propylene-ethylene block copolymers, for example.

The linear polypropylene resin has a melting point of preferably 145°C or higher, more preferably 155°C or higher, and further preferably 160°C or higher. This improves the heat resistance of the expanded particles and foam molded articles easily. At the same time, the linear polypropylene resin has a melting point Tm of preferably, but not particularly limited to, 170°C or lower, and more preferably 166°C or lower, in terms of the steam pressure during the in-mold foam molding, for example.

The linear polypropylene resin has a MFR of preferably 1 g/10 minutes or more and 10 g/10 minutes or less, more preferably 1.5 g/10 minutes or more and 9 g/10 minutes or less, and further preferably 2 g/10 minutes or more and 8 g/10 minutes or less. Linear polypropylene resin having the above range of the MFR makes it easier to produce expanded particles having the above range of the MFR, thus improving the aesthetic quality of the surface of resultant foam molded articles and enhancing productivity.

The linear polypropylene resin has a tanδ of preferably 2.0 or more and 7.0 or less, more preferably 2.5 or more and 6.0 or less, and further preferably 3.0 or more and 5.0 or less. Linear polypropylene resin having the above range of the tanδ makes it easier to produce expanded particles having the above range of the tanδ, thus reducing the open cell ratio and improving the moldability.

The branched polypropylene resin X may be any polypropylene resin having a branched structure, and examples thereof include modified polypropylene resins obtained by subjecting a linear polypropylene resin to at least one of a radiation treatment or a reaction with a radical polymerization initiator. Each case may be accompanied by or followed by a reaction with a functional unsaturated compound. In terms of easy production and economic advantage, modified polypropylene resins are preferred into which a branched structure is introduced by reacting a linear polypropylene resin with a radical polymerization initiator, etc.

Typical examples of the radical polymerization initiator include peroxides and azo compounds. Preferable initiators are those having an ability to abstract hydrogen from the polypropylene resin or functional unsaturated compound such as a conjugated diene compound (described later), and typical examples thereof include organic peroxides such as ketone peroxides, peroxyketals, hydroperoxides, dialkylperoxides, diacylperoxides, peroxydicarbonates, and peroxyesters. Among these, initiators having a high hydrogen abstraction ability are particularly preferred, and examples thereof include: peroxyketals such as 1,1-bis(t-butylperoxy)3,3,5-trimethylcyclohexane, 1,1-bis(t-butylperoxy)cyclohexane, n-butyl 4,4-bis(t-butylperoxy)valerate, and 2,2-bis(t-butylperoxy)butane; dialkylperoxides such as dicumyl peroxide, 2,5-dimethyl-2,5-di(t-butylperoxy)hexane, $\alpha,\alpha'$-bis(t-butylperoxy-m-isopropyl)benzene, t-butylcumyl peroxide, di-t-butyl peroxide, and 2,5-dimethyl-2,5-di(t-butylperoxy)-3-hexyne; diacylperoxides such as benzoyl peroxide; and peroxyesters such as t-butyl peroxyoctoate, t-butyl peroxyisobutyrate, t-butyl peroxylaurate, t-butyl peroxy-3,5,5-trimethylhexanoate, t-butyl peroxyisopropylcarbonate, 2,5-dimethyl-2,5-di(benzoylperoxy)hexane, t-butyl peroxyacetate, t-butyl peroxybenzoate, and di-t-butyl peroxyisophthalate. These may be used individually or in combination of two or more kinds.

The radical polymerization initiator is added in an amount of preferably 0.01 parts by mass or more and 10 parts by mass or less, and more preferably 0.05 parts by mass or more and 4 parts by mass or less with respect to 100 parts by mass of the linear polypropylene resin. The radical polymerization initiator added within the above range can modify resin efficiently.

The functional unsaturated compound may be a bifunctional unsaturated compound or a polyfunctional unsaturated compound having two or more functional groups, for example. Preferred is a bifunctional unsaturated compound that can be polymerized via free radicals. Examples of the bifunctional unsaturated compound include divinyl compounds, allyl compounds, conjugated diene compounds, aromatic and aliphatic bis(maleimides), and aromatic and aliphatic bis(citraconimides). Examples of the divinyl compounds include divinylaniline, m-divinylbenzene, p-divinylbenzene, divinylpentane, and divinylpropane. Examples of the allyl compounds include allyl acrylate, allyl methacrylate, allyl methyl maleate, and allyl vinyl ether. Examples of the conjugated diene compounds include butadiene, isoprene, 1,3-heptadiene, 2,3-dimethylbutadiene, and 2,5-dimethyl-2,4-hexadiene. These may be used individually or in combination of two or more kinds. Among these, conjugated diene compounds are preferred, and butadiene and isoprene are particularly preferred because they are inexpensive and easy to handle, and the reaction is likely to proceed uniformly.

The conjugated diene compound may be used in combination with a monomer copolymerizable therewith, and examples of such a monomer include: vinyl chloride, vinylidene chloride, acrylonitrile, methacrylonitrile, acrylamide, methacrylamide, vinyl acetate, acrylic acid, methacrylic acid, maleic acid, maleic anhydride, acrylic metal salt, methacrylic metal salt, and acrylic esters such as methyl acrylate, ethyl acrylate, butyl acrylate, 2-ethylhexyl acrylate, and stearyl acrylate; and methacrylic esters such as methyl methacrylate, ethyl methacrylate, butyl methacrylate, 2-ethylhexyl methacrylate, and stearyl methacrylate.

The conjugated diene compound is added in an amount of preferably 0.01 parts by mass or more and 20 parts by mass or less, more preferably 0.05 parts by mass or more and 5 parts by mass or less, and further preferably 0.2 parts by mass or more and 2.5 parts by mass or less with respect to 100 parts by mass of the linear polypropylene resin. The conjugated diene compound added within the above range can exhibit modification effects and may contribute to the cost reduction.

Examples of a device for the reaction of the linear polypropylene resin, functional unsaturated compound (e.g., conjugated diene compound), and radical polymerization initiator include: kneaders such as rolls, co-kneaders, Banbury mixers, Brabenders, single screw extruders, and twin screw extruders; horizontal agitators such as twin-screw surface renewal devices and twin screw multi-disk devices; and vertical agitators such as double helical ribbon agitators. Among these, kneaders are preferred, and extruders such as single screw extruders and twin screw extruders are particularly preferred in terms of productivity.

The order and the method for mixing and kneading (agitating) the linear polypropylene resin, functional unsaturated compound (e.g., conjugated diene compound), and radical polymerization initiator are not particularly limited. The linear polypropylene resin, functional unsaturated compound (e.g., conjugated diene compound), and radical polymerization initiator may be mixed, and then melt-kneaded (agitated). Alternatively, the linear polypropylene resin may be melt-kneaded (agitated), and then the functional unsaturated compound (e.g., conjugated diene compound) and the radical polymerization initiator may be simultaneously or separately mixed with the linear polypropylene resin, either all at once or in portions. The temperature of the kneader (agitator) is preferably 130°C or higher and 300°C or lower, because the linear polypropylene resin melts in the temperature range but does not thermally decompose. A preferable melt-kneading time is typically 1 minute or longer and 60 minutes or shorter.

The branched polypropylene resin X has a melt tension of preferably more than 13.8 cN, more preferably 14.0 cN or more, and further preferably 14.2 cN or more. This makes the expanded particles easily satisfy the above ranges of the open cell ratio and the melt fracture speed, thus improving the moldability. On the other hand, the branched polypropylene resin X has a melt tension of preferably 50 cN or less, and more preferably 30 cN or less, from the viewpoint of the work efficiency in the extrusion expansion.

The branched polypropylene resin X has a tanδ of preferably less than 3.3, more preferably 3.0 or less, further preferably 2.5 or less, still further preferably 2.0 or less, and particularly preferably 1.5 or less. Branched polypropylene resin X having the above range of the tanδ makes the expanded particles easily satisfy the above ranges of the open cell ratio and the melt fracture speed, thus improving the moldability. On the other hand, the branched polypropylene resin X has a tanδ of preferably 0.5 or more, and more preferably 0.6 or more, from the viewpoint of the work efficiency in the extrusion expansion.

The branched polypropylene resin X preferably has a melt fracture speed of more than 3.6 m/minute, more preferably 3.7 m/minute or more, and further preferably 3.9 m/minute or more. Branched polypropylene resin X having the above range of the melt fracture speed makes the expanded particles easily satisfy the above ranges of the open cell ratio and the melt fracture speed, thus improving the moldability. On the other hand, the branched polypropylene resin X has a melt fracture speed of preferably 20 m/minute or less, and more preferably 15 m/minute or less, from the viewpoint of the work efficiency in the extrusion expansion.

The branched polypropylene resin X has a MFR of preferably 0.5 g/10 minutes or more and 5 g/10 minutes or less, more preferably 1.0 g/10 minutes or more and 4 g/10 minutes or less, and further preferably 1.5 g/10 minutes or more and 3 g/10 minutes or less. Branched polypropylene resin X having the above range of the MFR improves the aesthetic quality of the surface of resultant foam molded articles and enhances productivity.

The branched polypropylene resin X has a melting point of preferably 150°C or higher, more preferably 155°C or higher, and further preferably 160°C or higher. This improves the heat resistance of the expanded particles and foam molded articles easily. At the same time, the branched polypropylene resin X has a melting point Tm of preferably, but not particularly limited to, 170°C or lower, and more preferably 166°C or lower, in terms of the steam pressure during the in-mold foam molding, for example.

The branched polypropylene resin X may be a commercially available product such as Daploy (trademark) WB140HMS manufactured by Borealis AG.

In one or more embodiments of the present invention, the base resin may contain resins other than the polypropylene resin in an amount of 10 mass% or less, 5 mass% or less, 3 mass% or less, or 1 mass% or less, in addition to the polypropylene resin, to an extent that the effect of the present invention is not impaired. More specifically, in one or more embodiments of the present invention, the base resin may contain 90 mass% or more and 100 mass% or less of the polypropylene resin and 0 mass% or more and 10 mass% or less of the other resins, or 95 mass% or more and 100 mass% or less of the polypropylene resin and 0 mass% or more and 5 mass% or less of the other resins, or 97 mass% or more and 100 mass% or less of the polypropylene resin and 0 mass% or more and 3 mass% or less of the other resins, or 99 mass% or more and 100 mass% or less of the polypropylene resin and 0 mass% or more and 1 mass% or less of the other resins. Examples of the other resins include: polyethylene resins such as high-density polyethylene, medium-density polyethylene, low-density polyethylene, linear low-density polyethylene, linear very-low-density polyethylene, ethylene-vinyl acetate copolymers, ethylene-acrylic acid copolymers, and ethylene-methacrylic acid copolymers; styrene resins such as polystyrene, and styrene-maleic anhydride copolymers; and polyamides.

In one or more embodiments of the present invention, the expanded particles may contain the following additives in addition to the base resin as necessary: a cell nucleating agent (also referred to as a "nucleating agent"); a colorant; an antistatic agent; a flame retardant; stabilizers such as an antioxidant, a metal deactivator, a phosphorus processing stabilizer, an ultraviolet absorber, an ultraviolet stabilizer, a fluorescent brightening agent, metallic soap, and an antacid adsorbent; a cross-linking agent; a chain transfer agent; a lubricant; a plasticizer; a filler; and a reinforcing agent. Such additives in concentrated form may be contained in a resin to prepare a masterbatch, and the masterbatch resin may be added to a polypropylene resin mixture. As the resin for use as a masterbatch resin, a polyolefin resin is preferred, a polypropylene resin is more preferred, and a polypropylene resin that is the same as the polypropylene resin to be used in the base resin of the expanded particles is further preferred.

In one or more embodiments of the present invention, the polypropylene resin expanded particles are obtained by melt-kneading a base resin, a blowing agent, and as necessary additives, and extruding the melt; and cutting the extruded melt, for example. The melt-kneading preferably includes a first stage and a second stage, and the temperature of the second stage is lower than the temperature of the first stage. Specifically, the polypropylene resin expanded particles can be produced by what is called an extrusion expansion technique, including: feeding a base resin, a blowing agent, and as necessary additives, into a first-stage extruder for melt-kneading; feeding the melt into a second-stage extruder, in which the temperature is lower than temperature of the first-stage extruder, for cooling; and extruding the melt (a molten resin containing the blowing agent) through a die attached to the end of the second-stage extruder; and cutting the extruded melt. Setting the temperature of the second-stage extruder lower than the temperature of the first-stage extruder can reduce the open cell ratio of the expanded particles easily, thus improving the moldability. The main purpose for using the second-stage extruder is cooling, and any device other than extruders that can achieve this purpose may be used. For example, a static mixer, a melt cooler, etc., can be used instead.

In one or more embodiments of the present invention, the difference in the temperature between the first stage and the second stage is preferably 5°C or more, more preferably 8°C or more, and further preferably 10°C or more, from the viewpoint of reducing the open cell ratio of the expanded particles and improving the moldability. The difference in the temperature between the first stage and the second stage is preferably, but not particularly limited to, 50°C or less, and more preferably 40°C or less, from the viewpoint of easily decreasing the temperature of the second stage to a target temperature, for example.

In one or more embodiments of the present invention, the temperature of the first stage, which is not particularly limited, may be determined appropriately depending on the melting point of the base resin to be used, the kind and/or addition amount of the blowing agent, the kind and/or melting point of the additives, the allowable torque of the extruder, and the like, from the viewpoint of thoroughly melt-kneading the base resin, a blowing agent, and as necessary additives. The temperature of the first stage is preferably (Tm2 + 20°C) or higher and (Tm2 + 70°C) or lower, more preferably (Tm2 + 20°C) or higher and (Tm2 + 60°C) or lower, and further preferably (Tm2 + 20°C) or higher and (Tm2 + 50°C) or lower.

In one or more embodiments of the present invention, the temperature of the second stage, which is not particularly limited, may be determined appropriately depending on the melting point of the base resin to be used, the kind and/or addition amount of the blowing agent, the kind and/or melting point of the additives, the allowable torque of the extruder, and the like. The temperature of the second stage is preferably (Tm2 + 40°C) or lower, more preferably (Tm2 + 30°C) or lower, and further preferably (Tm2 + 20°C) or lower, from the viewpoint of reducing the open cell ratio of the expanded particles and the melt extrusion speed and improving the moldability. Further, the temperature of the second-stage extruder is preferably (Tm2 - 5°C) or higher, and more preferably Tm2 or higher, from the viewpoint of improving the work efficiency in the extrusion expansion, for example.

In general, chopping techniques for obtaining the expanded particles in the extrusion expansion technique are roughly classified into cold cutting techniques and die face cutting techniques. An example of the cold cutting techniques is a technique (strand cutting technique) in which a molten resin containing a blowing agent extruded from a porous die is expanded, and strands of expanded resin are taken up while being cooled through a water tank or the like and then chopped. The die face cutting techniques are techniques in which a molten resin extruded from a porous die is cut with a cutter that is rotated in contact with the die surface or with a slight gap being left between the cutter and the die surface. The die face cutting techniques are classified into an under-water cutting technique, a watering cutting technique, and a hot cutting technique, according to the cooling techniques.

In one or more embodiments of the present invention, examples of the blowing agent include: aliphatic hydrocarbons such as propane, normal butane, isobutane, normal pentane, isopentane, and hexane; aliphatic cyclized hydrogens such as cyclopentane and cyclobutane; inorganic gases such as air, nitrogen, and carbon dioxide; and water. These blowing agents may be used individually or in combination of two or more kinds. Among these, the blowing agent is preferably at least one of an inorganic gas or water from the viewpoint of safe handling and simplifying the required equipment specifications, and preferably an inorganic gas and particularly preferably carbon dioxide from the viewpoint of easily obtaining expanded resin with a high expansion ratio. The addition amount of the blowing agent is adjusted appropriately depending on the kind of the blowing agent and the target expansion ratio of the polypropylene resin expanded particles. The addition amount of the blowing agent is preferably 1 part by mass or more and 20 parts by mass or less, and more preferably 2 parts by mass or more and 15 parts by mass or less with respect to 100 parts by mass of the base resin.

A nucleating agent may be added as an additive to control the cell shape. Examples of the nucleating agent include sodium hydrogen carbonate, a mixture of sodium hydrogen carbonate and citric acid, monosodium citrate, talc, and calcium carbonate. These nucleating agents may be used individually or in combination of two or more kinds. In general, the addition amount of the nucleating agent is preferably, but not particularly limited to, 0.01 parts by mass or more and 5 parts by mass or less with respect to 100 parts by mass of the base resin.

The extrusion discharge amount from the second-stage extruder, a static mixer or melt cooler, is not particularly limited, and may be 1 kg/hour or more and 1000 kg/hour or less, for example. The extrusion discharge amount may be about 1 kg/hour or more and 50 kg/hour or less for a lab-type extruder and is preferably 20 kg/hour or more and 1000 kg/hour or less for a practical use-type extruder.

Although there is no limitation on the shape of a die used in the second-stage extruder, namely a static mixer or melt cooler, the opening of the die preferably has a circular shape from the viewpoint of easily obtaining expanded particles having the uniform external appearance and the uniform shape, and the diameter of the opening is preferably 0.1 mm or more and 2.0 mm or less, and more preferably 0.3 mm or more and 1.0 mm or less.

In an embodiment of the present invention, the mass per expanded particle is preferably 0.2 mg or more and 10 mg or less, and more preferably 0.5 mg or more and 6.0 mg or less. In an embodiment of the present invention, the mass per expanded particle is an average mass of resin particles calculated based on the masses of randomly selected 100 polypropylene resin expanded particles. When the mass per polypropylene resin expanded particle is 0.2 mg or more, the shrinkage ratio of foam molded articles tends not to be high, and when the mass per polypropylene resin expanded particle is 10 mg or less, they tend to be easily filled into a mold.

In one or more embodiments of the present invention, the expansion ratio of the expanded particles is not particularly limited and may be adjusted as necessary. In one or more embodiments of the present invention, the expansion ratio of the expanded particles is preferably 3 times or more and 40 times or less, and more preferably 3 times or more and 25 times or less, for example.

In one or more embodiments of the present invention, the expansion ratio of the polypropylene resin expanded particles may be determined in the following manner. A mass w (g) of the polypropylene resin expanded particles is measured, and then the polypropylene resin expanded particles are immersed in ethanol contained in a graduated cylinder. A volume v (cm$^3$) of the polypropylene resin expanded particles is measured based on an increase in the water level of the graduated cylinder (water immersion method), and a true specific gravity of the polypropylene resin expanded particles is calculated by pb = w/v. The expansion ratio is also calculated as a ratio (pr /pb) of the density pr of the polypropylene resin before expansion to the true specific gravity pb of the polypropylene resin expanded particles.

In one or more embodiments of the present invention, the polypropylene resin expanded particles have an average cell diameter of preferably, but are not particularly limited to, 100 $\mu$m or more and 500 $\mu$m or less, and more preferably 120 $\mu$m or more and 400 $\mu$m or less, for example. Polypropylene resin expanded particles having an average cell diameter of 100 $\mu$m or more are likely to reduce the shrinkage of resultant foam molded articles and those having an average cell diameter of 500 $\mu$m or less can shorten the molding cycle of the in-mold foam molding. In one or more embodiments of the present invention, the average cell diameter of the polypropylene resin expanded particles can be measured by the method described in examples.

In one or more embodiments of the present invention, the polypropylene resin expanded particles have a bulk density of preferably, but are not particularly limited to, 15 g/L or more and 300 g/L or less, and more preferably 30 g/L or more and 300 g/L or less, for example. Expanded particles having the above range of the bulk density can be easily formed into high-density foam molded articles. In one or more embodiments of the present invention, the bulk density of the polypropylene resin expanded particles can be measured by the method described in examples.

In one or more embodiments of the present invention, the foam molded article is composed of the polypropylene resin expanded particles. The foam molded article has excellent heat resistance and moldability.

In one or more embodiments of the present invention, the polypropylene resin foam molded article is obtained by filling the polypropylene resin expanded particles into a mold that can be closed but not hermetically sealed, followed by heating molding with steam or the like.

In order that the polypropylene resin foam molded article is molded from the polypropylene resin expanded particles, the following methods can be used, for example: (a) a method in which a predetermined internal pressure is applied to expanded particles by pressurizing the particles with an inorganic gas and thus impregnating the particles with the inorganic gas, and then the particles are filled into a mold and thermally fused by steam or the like (e.g., JP S51-22951A); (b) a method in which expanded particles are compressed with gas pressure, are filled into a mold, and then are thermally fused by steam or the like while utilizing the resilience of the particles (e.g., JP S53-33996A); and (c) a method in which expanded particles are filled into an open mold, and then the filled expanded particles are compressed by closing the mold to a predetermined mold gap and thermally fused by steam or the like.

In one or more embodiments of the present invention, the polypropylene resin foam molded article has a shrinkage ratio at 140°C of preferably -2.0% or more and 1.0% or less, more preferably -1.0% or more and 1.0% or less, and particularly preferably -0.5% or more and 0.5% or less, from the viewpoint of withstanding repeated use in a heat-applied portion. In one or more embodiments of the present invention, the shrinkage ratio of the polypropylene resin foam molded article at 140°C can be measured by the method described in examples.

In one or more embodiments of the present invention, the density of the polypropylene resin foam molded article may be determined appropriately depending on the intended use and is not particularly limited, but is preferably 80 g/L or more and 300 g/L or less, and more preferably 100 g/L or more and 300 g/L or less, for example. Foam molded articles having the above range of the density are less likely to shrink or deform by heat and suitable for repeated use. In one or more embodiments of the present invention, the density of the polypropylene resin foam molded article can be measured by the method described in examples.

In one or more embodiments, the present invention may have the following configuration.

[1] Polypropylene resin expanded particles containing a base resin that contains a polypropylene resin as a main component,

wherein the polypropylene resin expanded particles have a single melting peak in a temperature range from 130°C to 170°C and a melting heat amount in the temperature range from 130°C to 170°C of 90% or more of a total melting heat amount in first heating in differential scanning calorimetry,
the polypropylene resin expanded particles have a melting point Tm2 of 159°C or higher and 170°C or lower, the melting point Tm2 being a melting peak value in second heating in differential scanning calorimetry,
the polypropylene resin expanded particles have a melt fracture speed at 200°C of 5 m/minute or more and 45 m/minute or less, and
the polypropylene resin expanded particles have an open cell ratio of 15% or less.

[2] The polypropylene resin expanded particles according to [1], wherein the polypropylene resin expanded particles have a melt flow rate of 1 g/10 minutes or more and 10 g/10 minutes or less.

[3] The polypropylene resin expanded particles according to [1] or [2], wherein the polypropylene resin contains 60 mass% or more and 100 mass% or less of a polypropylene resin having a branched structure.

[4] The polypropylene resin expanded particles according to [3], wherein the polypropylene resin having a branched structure has a melt tension of more than 13.8 cN and a loss tangent tanδ of less than 3.3.

[5] A method for producing the polypropylene resin expanded particles according to any one of [1] to [4], including:

melt-kneading a base resin containing a polypropylene resin as a main component and a blowing agent and extruding the melt; and
cutting the extruded melt to obtain polypropylene resin expanded particles, wherein the melt-kneading includes a first stage and a second stage, and
a temperature of the second stage is lower than a temperature of the first stage.

[6] The method according to [5], wherein the temperature of the first stage is (Tm2 + 20°C) or higher and (Tm2 + 70°C) or lower, and the temperature of the second stage is (Tm2 - 5°C) or higher and (Tm2 + 40°C) or lower.

[7] The method according to [5] or [6], wherein the blowing agent is at least one selected from the group consisting of inorganic gas and water.

[8] A polypropylene resin foam molded article composed of the polypropylene resin expanded particles according to any one of [1] to [4].

[9] The polypropylene resin foam molded article according to [8], wherein the polypropylene resin foam molded article has a shrinkage ratio at 140°C of -2.0% or more and 1.0% or less.

Examples

Hereinafter, one or more embodiments of the present invention will be described in more detail by way of examples. However, the present invention is not limited to these examples.

The following polypropylene resins were used in the examples and comparative examples. Table 1 below summarizes the melt tension, melt fracture speed, melting point, MFR, and tanδ of each of the following polypropylene resins.

(1) B-PP-1: propylene homopolymer having a branched structure (Daploy (trademark) WB140HMS manufactured by Borealis AG.)

(2) B-PP-2: propylene homopolymer having a branched structure (Amppleo (trademark) 1025MA manufactured by Braskem S.A.)

(3) B-PP-3: propylene homopolymer having a branched structure (SABIC (registered trademark) PP-UMS HEX17112 manufactured by SABIC)

(4) PP-4: ethylene-propylene block copolymer (BC250MO manufactured by Borealis AG.); propylene, 99.5 mass%

(5) PP-5: propylene homopolymer (F113G manufactured by Prime Polymer Co., Ltd.)

(6) PP-6: ethylene-propylene random polymer (RD234CF manufactured by Borealis AG.); propylene, 98 mass%

[Table 1]

| | Melt tension [cN] | Melt fracture speed [m/minute] | Melting point [°C] | MFR [g/10 min] | Tanδ 0.1 rad/s |
|---|---|---|---|---|---|
| B-PP-1 | 14.4 | 4.1 | 161 | 2.1 | 1.3 |
| B-PP-2 | 13.8 | 3.6 | 160 | 2.5 | 1.1 |
| B-PP-3 | 16.2 | 4.0 | 162 | 2.5 | 3.3 |
| PP-4 | Not fractured | | 165 | 4.2 | 4.9 |
| PP-5 | Not fractured | | 162 | 3.1 | 3.8 |
| PP-6 | Not fractured | | 149 | 7.0 | 6.5 |

The following are evaluation methods and measurement methods used in the examples and comparative examples.

<Measurement of melting point of polypropylene resin>

A differential scanning calorimeter (DSC) (DSC6200 manufactured by Seiko Instruments Inc.) was used to measure the melting point of the polypropylene resin. Specifically, the melting point is a melting peak temperature on a DSC curve in the second heating that is obtained by heating 5 to 6 mg of the sample from 40°C to 220°C at a rate of 10°C/minute for melting, followed by cooling from 220°C to 40°C at a rate of 10°C/minute for crystallization, and again heating from 40°C to 220°C at a rate of 10°C/minute.

<Differential scanning calorimetry of polypropylene resin expanded particles>

A differential scanning calorimeter (DSC) (DSC6200 manufactured by Seiko Instruments Inc.) was used to obtain DSC curves in the first heating and the second heating, by heating 5 to 6 mg of the polypropylene resin expanded particles from 40°C to 300°C at a rate of 10°C/minute for melting, followed by cooling from 300°C to 40°C at a rate of 10°C/minute for crystallization, and again heating from 40°C to 300°C at a rate of 10°C/minute.

«Heat amount ratio»

A line segment AB was drawn that connects a point (point A) corresponding to 100°C and a melting end point (point B) on the DSC curve in the first heating. A melting heat amount of an area enclosed by the line segment AB and the DSC curve was calculated as a total melting heat amount Q1. A straight line was drawn in parallel to the Y axis from a point (point C) on the line segment AB corresponding to 130°C onto the DSC curve, and an intersection of the straight line and the DSC curve was defined as a point D. Similarly, a straight line was drawn in parallel to the Y axis from a point (point E) on the line segment AB corresponding to 170°C onto the DSC curve, and an intersection of the straight line and the DSC curve was defined as a point F. A melting heat amount of an area enclosed by a line segment CD, a line segment CE, a line segment EF, and the DSC curve was calculated as a melting heat amount Q2 in the temperature range from 130°C to 170°C. If the melting end temperature was less than 170°C, a melting heat amount enclosed by the line segment CD, a line segment CB, and the DSC curve was calculated as a melting heat amount Q2. The melting heat amount ratio was calculated by the following formula using Q1 and Q2.

$$\text{Melting heat amount ratio } (\%) = Q2 \times 100 \,/\, Q1$$

« Melting point»

The melting peak temperature in the second heating was defined as a melting point Tm2 of the polypropylene resin expanded particles.

<Melt flow rate (MFR)>

The melt flow rate was measured in conformity with the prescriptions of the method B of JIS K 7210 under the condition that the orifice diameter was 2.0959 ± 0.005 mm, the orifice length was 8.000 ± 0.025 mm, the temperature was 230°C, and the load was 2.16 kg.

Specifically, the MFR was measured using a melt indexer S-01 (manufactured by Toyo Seiki Seisaku-sho, Ltd.) in conformity with the prescriptions of the method B of JIS K 7210. An amount of resin extruded from a die in a certain period of time under a load of 2.16 kg at 230°C was converted into an amount of resin extruded in 10 minutes, and the converted amount was defined as an MFR. Specifically, the certain period of time is 120 seconds for the melt flow rate of more than 0.5 g/10 minutes and 1.0 g/10 minutes or less, 60 seconds for the melt flow rate of more than 1.0 g/10 minutes and 3.5 g/10 minutes or less, 30 seconds for the melt flow rate of more than 3.5 g/10 minutes and 10 g/10 minutes or less, 10 seconds for the melt flow rate of more than 10 g/10 minutes and 25 g/10 minutes or less, 5 seconds for the melt flow rate of more than 25 g/10 minutes and 100 g/10 minutes or less, and 3 seconds for the melt flow rate of more than 100 g/10 minutes.

<Melt tension>

A Capirograph (manufactured by Toyo Seiki Seisaku-sho, Ltd.) was used that includes an attachment for melt tension measurement and a cylinder (diameter: 10 mm) with an orifice (diameter: 1 mm, length: 10 mm) at its end. A strand discharged from a die along with the downward movement of a piston at a speed of 10 mm/minute at 200°C was hung on a pulley with a load cell located 350 mm below and taken up at a speed of 1 m/minute. After stabilization, the take-up speed was increased at a rate to reach 200 m/minute in 4 minutes. A load (unit: cN) applied to the pulley with a load cell when the strand was fractured was defined as a melt tension. If the strand did not fracture, the melt tension was judged unmeasurable.

<Melt fracture speed>

A melt fracture speed refers to a take-up speed at which the strand was fractured due to the increased take-up speed in the above melt tension measurement. If the strand did not fracture, the melt fracture speed was judged unmeasurable. The melt fracture speed can be an index of ductility of a molten resin during expansion.

<Preparation of samples for measurement of MFR, melt tension, and melt fracture speed of polypropylene resin expanded particles>

For measurement of the MFR, melt tension, and melt fracture speed of the polypropylene resin expanded particles, the expanded particles or foam molded article were formed into a resin lump for use as a sample. The measurement may use either the expanded particles or foam molded article, because the resin physical properties are the same.

The expanded particles were placed in a dryer, the temperature of which was adjusted to (Tm2 + 10°C) based on the melting point Tm2 of the expanded particles. The pressure inside the dryer was reduced to -0.05 MPa (gauge pressure) to -0.10 MPa (gauge pressure) for 5 to 10 minutes by a vacuum pump, and the expanded particles were left in the dryer for 30 minutes to remove air inside the expanded particles to obtain a resin lump. If the resin sticks to each other and the lump is large, the resin lump may be finely cut with scissors or the like or pulverized with a mixer or the like.

In the case of the foam molded article, the molded article was finely cut with scissors, a slicer, or the like, and then pulverized with a mixer or the like. The fragments of the pulverized foam molded article were placed in a dryer, the temperature of which was adjusted to (Tm2 + 10°C) based on the melting point Tm2 of the expanded particles. The pressure inside the dryer was reduced to -0.05 MPa•G to -0.10 MPa•G for 5 to 10 minutes by a vacuum pump, and the fragments were left in the dryer for 30 minutes to remove air inside the foam molded article to obtain a resin lump. If the resin sticks to each other and the lump is large, the resin lump may be finely cut with scissors or the like or pulverized with a mixer or the like.

<Loss tangent tan$\delta$>

A polypropylene resin or polypropylene resin expanded particles were heat-pressed for 5 minutes at 190°C using a spacer having a thickness of 1.5 mm to prepare a press plate having a thickness of 1.5 mm. A $\varphi$ 25 mm specimen was punched out from the press plate using a $\varphi$ 25 mm punch. As a measurement device, a viscoelastic measuring device ARES manufactured by TA Instruments, mounted with a $\varphi$ 25 mm parallel plate fixture, was used. A thermostat was arranged to enclose the fixture and kept at 200°C to preheat the fixture. Then, the thermostat was opened to insert the $\varphi$ 25 mm specimen between the parallel plates and closed to preheat the specimen for 5 minutes. Thereafter, the parallel plate gap was narrowed to 1 mm to compress the specimen. After the compression, the thermostat was opened again, and an excess resin protruding from the parallel plates was removed with a brass spatula. The thermostat was closed and kept again for 5 minutes. Then, dynamic viscoelastic measurement was started. The measurement was performed at an angular frequency ranging from 0.1 rad/s to 100 rad/s. A storage elastic modulus and a loss elastic modulus at each angular frequency were obtained, and a loss tangent tan $\delta$ at the each angular frequency was obtained as a calculated value. Among the results, a value of loss tangent tan $\delta$ at an angular frequency of 0.1 rad/s was used. The measurement was performed at a strain amount of 5% under a nitrogen atmosphere.

<Open cell ratio of polypropylene resin expanded particles>

The volume of the polypropylene resin expanded particles obtained in accordance with the method described in Procedure C of ASTM D2856-87 was defined as Vc (cm$^3$), and the open cell ratio (%) was determined based on the following formula.

$$\text{Open cell ratio (\%)} = ((Va - Vc) \times 100) / Va$$

The volume Vc was measured with an air-comparison pycnometer Model 1000 manufactured by Tokyo-Science Co., Ltd. The volume Va (cm$^3$) was an apparent volume of the polypropylene resin expanded particles and measured as follows. After the volume Vc was measured with the air-comparison pycnometer, all the polypropylene resin expanded particles were immersed in ethanol contained in a graduated cylinder, and the volume Va was measured based on an increase in the liquid level of the graduated cylinder (water immersion method).

<Bulk density of polypropylene resin expanded particles>

The polypropylene resin expanded particles were collected in a 1 L measuring cup to measure the mass, and the mass (g) was divided by a volume of 1 L to determine the bulk density.

<Average cell diameter of polypropylene resin expanded particles>

The polypropylene resin expanded particles were cut through substantially the center of each particle with a double-edged razor (double-edged blade of high stainless steel manufactured by FEATHER Safety Razor Co., Ltd.), taking great care not to destroy the expanded membrane (cell membrane). The cut surfaces were observed and microphotographed with a microscope (VHX-100 manufactured by KEYENCE CORPORATION.) at a magnification of 100X. In the image obtained, a line segment corresponding to a length of 1000 μm was drawn that passed through the portion of each of the polypropylene resin expanded particles except for the surface layer, and the number of cells n through which the line segment passed was counted. Based on the number of cells n, a cell diameter was calculated by "1000/n" (μm). The same was performed on 10 polypropylene resin expanded particles, and the calculated cell diameters were averaged to determine an average cell diameter.

<Moldability of polypropylene resin foam molded article>

«Molding method»

A polyolefin foam molding machine manufactured by Teubert Maschinenbau GmbH was used. The polypropylene resin expanded particles were filled into a block mold (length, 381 mm; width, 381 mm; and thickness, 60 mm) with a mold gap (hereinafter called "cracking") being set at 18 mm (cracking rate: 30%) and compressed to the mold thickness of 60 mm. Next, air in the mold was discharged by steam of 0.15 MPa (gauge pressure), followed by double-side heat molding for 5 seconds using steam of a predetermined pressure to produce a polypropylene resin foam molded article. At this time, the steam pressure was raised from 0.32 MPa (gauge pressure) up to 0.42 MPa (gauge pressure) in increments of 0.01 MPa to produce the molded article.

<<Evaluation method>>

The obtained foam molded article was left in a drying chamber at 75°C for 24 hours and then left at room temperature for 4 hours to prepare a foam molded article for evaluation. The foam molded article thus prepared was evaluated for the fusion rate and the surface elongation. A lowest steam pressure at which an acceptable fusion rate and an acceptable surface elongation were obtained was defined as a minimum molding pressure, and a highest steam pressure at which a molded article can be released only by air was defined as a maximum molding pressure. A difference between the maximum molding pressure and the minimum molding pressure was regarded as a molding process heating range, and the moldability was evaluated according to this range.

Good: molding process heating range of 0.04 MPa or more
Poor: molding process heating range of less than 0.04 MPa

(1) Evaluation of fusion rate

The fusion rate of the foam molded article was evaluated by forming a crack in a depth of about 5 mm on the surface of the foam molded article with a knife, splitting the in-mold foam molded article along the crack, observing the fracture surface, and calculating the proportion of the number of destroyed particles to the total number of particles on the fracture surface. The fusion rate of 80% or more was judged acceptable.

(2) Evaluation of surface elongation

The foam molded article was evaluated whether or not gaps were formed between the expanded particles at the central portion of the surface having the largest area in the foam molded article. Insufficient steam pressure during the in-mold foam molding cannot fill the gaps between the expanded particles sufficiently. The molded article in which the number of gaps between the expanded particles was small and the aesthetic quality of the surface was high was judged acceptable.

<Density of polypropylene resin foam molded article>

A mass W (g) of the polypropylene resin foam molded article was measured, and the length, width, and thickness were measured with a vernier caliper to calculate the volume V ($cm^3$). The density of the molded article was determined by "W/V". The unit was converted into g/L.

<Shrinkage ratio at 140°C>

The shrinkage ratio was measured according to JIS K 6767. The polypropylene resin foam molded article was cut into a cuboid having a length of 150 mm and a width of 150 mm, and three parallel straight lines each having a length of 100 mm were drawn both in the length direction and the width direction at intervals of 50 mm at the central portion of the specimen. The length of each straight line was recorded to calculate an average value L0. The specimen was heated in a hot air circulation dryer for 22 hours under a temperature of 140 ± 2°C. The specimen taken out from the dryer was left for 1 hour in an environment of a temperature of 23 ± 2°C and a humidity of 50 ± 5%, then the length of each straight line was measured to calculate an average value L1. The shrinkage ratio at 140°C was determined by the following formula.

$$\text{Shrinkage ratio at } 140°C \, (\%) = (L1 - L0) \times 100 / L0$$

(Example 1)

[Production of polypropylene resin expanded particles] 100 parts by mass of the polypropylene resin of the kind indicated in Table 2 below was blended in a tumbler with 1 part by mass of a nucleating agent masterbatch (sodium hydrogen carbonate masterbatch manufactured by Dainichiseika Color & Chemicals Mfg. Co., Ltd.; sodium hydrogen carbonate content, 20%; base resin, low-density polyethylene resin). The blend was fed to an extruder (φ 26 mm twin screw extruder) set at 210°C. 3.0 parts by mass of carbon dioxide as a blowing agent was injected into the extruder, and the blend was melt-kneaded. Next, the melt was passed through a melt cooler set at 185°C for cooling and then extruded under atmospheric pressure at a discharge rate of 10 kg/hour from a die having three small holes 0.8 mm in diameter, which was attached to the end of the melt cooler. A chamber attached to the die tip was filled with water so that water was in contact with the die and the water pressure in the chamber was 0.40 MPa (gauge pressure). The molten resin containing the blowing agent extruded from the die was cut in water at 80°C into particles having a mass per particle of 1.5 to 2.0 mg to produce polypropylene resin expanded particles.

[Production of polypropylene resin foam molded article]

A polyolefin foam molding machine manufactured by Teubert Maschinenbau GmbH was used. The polypropylene resin expanded particles were filled into a block mold (length, 381 mm; width, 381 mm; and thickness, 60 mm) with a mold gap (cracking) being set at 18 mm (cracking rate: 30%) and compressed to the mold thickness of 60 mm. Next, the air inside the mold was discharged with steam of 0.15 MPa (gauge pressure), followed by heat molding for 5 seconds with the steam of the minimum molding pressure (gauge pressure) shown in Table 2 to produce a polypropylene resin foam molded article.

(Example 2)

Polypropylene resin expanded particles and a polypropylene resin foam molded article of Example 2 were produced in the same manner as in Example 1 except that the temperature of the melt cooler was changed to 200°C in the [Production of polypropylene resin expanded particles].

(Example 3)

Polypropylene resin expanded particles and a polypropylene resin foam molded article of Example 3 were produced in the same manner as in Example 1 except that a mixed resin shown in Table 2 was used as the polypropylene resin, and the amount of carbon dioxide as a blowing agent injected into the extruder was changed to 3.5 parts by mass in the [Production of polypropylene resin expanded particles]; and the steam of the minimum molding pressure (gauge pressure) shown in Table 2 was used in the [Production of polypropylene resin foam molded article].

(Examples 4 and 5)

Polypropylene resin expanded particles and polypropylene resin foam molded articles of Examples 4 and 5 were produced in the same manner as in Example 1 except that a mixed resin shown in Table 2 was used as the polypropylene resin in the [Production of polypropylene resin expanded particles], and the steam of the minimum molding pressure (gauge pressure) shown in Table 2 was used in the [Production of polypropylene resin foam molded article].

(Example 6)

Polypropylene resin expanded particles and a polypropylene resin foam molded article of Example 6 were produced in the same manner as in Example 1 except that the temperature of the melt cooler was changed to 170°C, and the water pressure in the chamber attached to the die tip was set at 0.10 MPa (gauge pressure) in the [Production of polypropylene resin expanded particles]; and the steam of the minimum molding pressure (gauge pressure) shown in Table 2 was used in the [Production of polypropylene resin foam molded article].

(Comparative Example 1)

Polypropylene resin expanded particles and a polypropylene resin foam molded article of Comparative Example 1 were produced in the same manner as in Example 1 except that the resin shown in Table 3 below was used as the polypropylene resin in the [Production of polypropylene resin expanded particles], and the steam of the minimum molding pressure (gauge pressure) shown in Table 3 was used in the [Production of polypropylene resin foam molded article].

(Comparative Example 2)

Polypropylene resin expanded particles of Comparative Example 2 were produced in the same manner as in Example 1 except that the resin shown in Table 3 was used as the polypropylene resin in the [Production of polypropylene resin expanded particles].
A polypropylene resin foam molded article of Comparative Example 2 was attempted to be produced in the same manner as in Example 1 using the polypropylene resin expanded particles thus obtained. Although the molding steam pressure was raised up to 0.42 MPa (gauge pressure), a favorable molded article could not be obtained. The expanded particles had a high open cell ratio, and the resultant molded article shrank.

(Comparative Examples 3 and 4)

Polypropylene resin expanded particles of Comparative Examples 3 and 4 were produced in the same manner as in Example 1 except that the resin shown in Table 3 was used as the polypropylene resin, the amount of carbon dioxide as a blowing agent injected into the extruder was changed to 4.0 parts by mass, and water with a pressure of 0.35 MPa (gauge pressure) was fed into the chamber attached to the die tip in the [Production of polypropylene resin expanded particles].
Polypropylene resin foam molded articles of Comparative Examples 3 and 4 were attempted to be produced in the same manner as in Example 1 using the polypropylene resin expanded particles thus obtained. Although the steam pressure was raised up to 0.42 MPa (gauge pressure), favorable molded articles could not be obtained. The expanded particles had a high open cell ratio, and the resultant molded articles shrank largely.

(Comparative Example 5)

Polypropylene resin expanded particles of Comparative Example 5 were produced in the same manner as in Example 1 except that the resin shown in Table 3 was used as the polypropylene resin, the amount of carbon dioxide as a blowing agent injected into the extruder was changed to 4.0 parts by mass, the temperature of the melt cooler was changed to 170°C, and water with a pressure of 0.35 MPa (gauge pressure) was fed into the chamber attached to the die tip in the [Production of polypropylene resin expanded particles].
A polypropylene resin foam molded article of Comparative Example 5 was attempted to be produced in the same manner as in Example 1 using the polypropylene resin expanded particles thus obtained. Although the steam pressure was raised from 0.20 MPa (gauge pressure) to 0.36 MPa (gauge pressure), a molded article could not be obtained. The expanded particles had a high open cell ratio, and the resultant molded article shrank largely.

(Comparative Example 6)

Polypropylene resin expanded particles of Comparative Example 6 were produced in the same manner as in Example 1 except that the mixed resin shown in Table 3 was used as the polypropylene resin, the amount of carbon dioxide as a blowing agent injected into the extruder was changed to 3.5 parts by mass, and water with a pressure of 0.35 MPa (gauge pressure) was fed into the chamber attached to the die tip in the [Production of polypropylene resin expanded particles].

A polypropylene resin foam molded article of Comparative Example 6 was attempted to be produced in the same manner as in Example 1 using the polypropylene resin expanded particles thus obtained. Although the steam pressure was raised up to 0.42 MPa (gauge pressure), a favorable molded article could not be obtained. The expanded particles had a high open cell ratio, and the resultant molded article shrank largely.

(Comparative Example 7)

Polypropylene resin expanded particles of Comparative Example 7 were produced in the same manner as in Example 1 except that the mixed resin shown in Table 3 was used as the polypropylene resin, the amount of carbon dioxide as a blowing agent injected into the extruder was changed to 3.5 parts by mass, the temperature of the melt cooler was changed to 180°C, and water with a pressure of 0.35 MPa (gauge pressure) was fed into the chamber attached to the die tip in the [Production of polypropylene resin expanded particles]. A polypropylene resin foam molded article of Comparative Example 7 was produced in the same manner as in Example 1 except that the minimum molding pressure (gauge pressure) was changed to the value shown in Table 3, and the cracking rate was set at 50% in the [Production of polypropylene resin foam molded article].

(Comparative Example 8)

Polypropylene resin expanded particles and a polypropylene resin foam molded article of Comparative Example 8 were produced in the same manner as in Example 1 except that the resin shown in Table 3 was used as the polypropylene resin, and the temperature of the melt cooler was changed to 210°C in the [Production of polypropylene resin expanded particles]; and the minimum molding pressure (gauge pressure) was changed to the value shown in Table 3 in the [Production of polypropylene resin foam molded article].

Table 2 and Table 3 show the evaluation results of the polypropylene resin expanded particles and the polypropylene resin foam molded articles obtained in the examples and comparative examples. Regarding the "extrusion expansion condition" in Tables 2 and 3, the temperature of the first stage is the temperature of the extruder, and the temperature of the second stage is the temperature of the melt cooler.

FIG. 2 is the DSC curve of the polypropylene resin expanded particles of Example 1 obtained in the first heating in differential scanning calorimetry. FIG. 2 indicates that the polypropylene resin expanded particles have a single melting peak in the temperature range from 130°C to 170°C in the first heating. Although the DSC curves of the polypropylene resin expanded particles of Examples 2 to 6 are not illustrated, it was confirmed that these particles also had a single melting peak in the temperature range from 130°C to 170°C in the first heating.

[Table 2]

| | | | Ex. 1 | Ex. 2 | Ex. 3 | Ex. 4 | Ex. 5 | Ex. 6 |
|---|---|---|---|---|---|---|---|---|
| Blend of raw material resin (parts by mass) | Branched PP | B-PP-1 | 100 | 100 | 75 | 75 | 75 | 100 |
| | Linear PP | PP-4 | | | 25 | | | |
| | | PP-5 | | | | 25 | | |
| | | PP-6 | | | | | 25 | |
| Extrusion expansion condition | Temperature of first stage | [°C] | 210 | 210 | 210 | 210 | 210 | 210 |
| | $CO_2$ | [parts by mass] | 3.0 | 3.0 | 3.5 | 3.0 | 3.0 | 3.0 |
| | Temperature of second stage | [°C] | 185 | 200 | 185 | 185 | 185 | 170 |
| | Water pressure | [MPa] | 0.40 | 0.40 | 0.40 | 0.40 | 0.40 | 0.10 |
| Expanded particles | Bulk density | [g/L] | 90 | 92 | 92 | 90 | 93 | 60 |
| | Average cell diameter | [μm] | 140 | 140 | 130 | 130 | 130 | 150 |
| | Open cell ratio | % | 6 | 8 | 9 | 8 | 8 | 11 |
| | Melting point | [°C] | 161 | 161 | 164 | 164 | 160 | 161 |
| | Melt fracture speed | [m/min] | 27.8 | 31.2 | 39.8 | 40.1 | 39.9 | 28.2 |
| | MFR | [g/10 min] | 6.0 | 6.1 | 5.7 | 5.8 | 5.5 | 6.0 |
| | The number of peaks on DSC curve in the range from 130°C to 170°C | | 1 | 1 | 1 | 1 | 1 | 1 |
| | Melting heat amount ratio on DSC curve in the range from 130°C to 170°C (%) | | 94.3 | 94.0 | 95.0 | 95.1 | 92.5 | 94.2 |
| Molding condition | Moldable steam pressure | [MPa] | 0.36-0.42 | 0.36-0.42 | 0.40-0.44 | 0.40-0.44 | 0.35-0.41 | 0.38-0.42 |
| | Minimum molding pressure | [MPa] | 0.36 | 0.36 | 0.40 | 0.40 | 0.35 | 0.38 |
| | Moldability | | Good | Good | Good | Good | Good | Good |
| Molded article | Density of molded article | [g/L] | 138 | 140 | 145 | 140 | 145 | 94 |
| | Shrinkage ratio at 140°C | [%] | -0.2 | -0.2 | -0.4 | -0.3 | -0.5 | -0.8 |

* Ex.: Example

[Table 3]

| | | | Comp. Ex. 1 | Comp. Ex. 2 | Comp. Ex. 3 | Comp. Ex. 4 | Comp. Ex. 5 | Comp. Ex. 6 | Comp. Ex. 7 | Comp. Ex. 8 |
|---|---|---|---|---|---|---|---|---|---|---|
| Blend of raw material resin (parts by mass) | Branched PP | B-PP-1 | | | | | | 25 | 40 | 100 |
| | | B-PP-2 | 100 | | | | | | | |
| | | B-PP-3 | | 100 | | | | | | |
| | Linear PP | PP-4 | | | 100 | | | 75 | | |
| | | PP-5 | | | | 100 | | | | |
| | | PP-6 | | | | | 100 | | 60 | |
| Extrusion expansion condition | Temperature of first stage | [°C] | 210 | 210 | 210 | 210 | 210 | 210 | 210 | 210 |
| | $CO_2$ | [parts by mass] | 3.0 | 3.0 | 4.0 | 4.0 | 4.0 | 3.5 | 3.5 | 3.0 |
| | Temperature of second stage | [°C] | 185 | 185 | 185 | 185 | 170 | 185 | 180 | 210 |
| | Water pressure | [MPa] | 0.40 | 0.40 | 0.35 | 0.35 | 0.35 | 0.35 | 0.35 | 0.40 |
| Expanded particles | Bulk density | [g/L] | 90 | 91 | 90 | 90 | 90 | 90 | 90 | 91 |
| | Average cell diameter | [μm] | 140 | 140 | 110 | 110 | 110 | 140 | 130 | 135 |
| | Open cell ratio | % | 12 | 30 | 81 | 87 | 85 | 68 | 39 | 27 |
| | Melting point | [°C] | 160 | 162 | 165 | 165 | 148 | 165 | 157 | 161 |
| | Melt fracture speed | [m/min] | 68.1 | Not fractured | Not fractured | Not fractured | Not fractured | Not fractured | Not fractured | 38.2 |
| | MFR | [g/10 min] | 8.1 | 11.0 | 2.1 | 3.1 | 7.2 | 3.3 | 5.2 | 6.2 |
| | The number of peaks on DSC curve in the range from 130°C to 170°C | | 1 | 1 | 1 | 1 | 1 | 1 | 1 | 1 |
| | Melting heat amount ratio on DSC curve in the range from 130°C to 170°C (%) | | - | - | - | - | - | - | - | - |

| | | | Comp. Ex. 1 | Comp. Ex. 2 | Comp. Ex. 3 | Comp. Ex. 4 | Comp. Ex. 5 | Comp. Ex. 6 | Comp. Ex. 7 | Comp. Ex. 8 |
|---|---|---|---|---|---|---|---|---|---|---|
| Molding condition | Moldable steam pressure | [MPa] | 0.42 | Unmoldable | Unmoldable | Unmoldable | Unmoldable | Unmoldable | 0.38 | 0.40-0.42 |
| | Minimum molding pressure | [MPa] | 0.42 | - | - | - | - | - | 0.38 | 0.4 |
| | Moldability | | Poor | - | - | - | - | - | Poor | Poor |
| Molded article | Density of molded article | [g/L] | 144 | - | - | - | - | - | 160 | 140 |
| | Shrinkage ratio at 140°C | [%] | -0.5 | - | - | - | - | - | -2.5 | -0.3 |

* Comp. Ex.: Comparative Example

The data of Table 2 indicate that the expanded particles of Examples 1 to 6 satisfying the following produced highly heat-resistant foam molded articles with high moldability: the expanded particles having a single melting peak in the temperature range from 130°C to 170°C and a melting heat amount in the temperature range from 130°C to 170°C of 90% or more of the total melting heat amount in the first heating in differential scanning calorimetry; having a melting point Tm2 of 159°C or higher and 170°C or lower; having a melt fracture speed of 5 m/minute or more and 45 m/minute or less; and having an open cell ratio of 15% or less.

On the other hand, the data of Table 3 indicate that the expanded particles of Comparative Example 1 having a melt fracture speed of more than 45 m/minute resulted in poor moldability. The expanded particles of Comparative Examples 2 to 6 exceeding a melt fracture speed of 45 m/minute and having an open cell ratio of more than 15% also resulted in poor moldability. The expanded particles of Comparative Example 8 having an open cell ratio of less than 15% also resulted in poor moldability. The expanded particles of Comparative Example 7 exceeding a melt fracture speed of 45 m/minute and having an open cell ratio of more than 15% and a melting point of less than 159°C resulted in the foam molded article having poor moldability and poor heat resistance.

The invention may be embodied in other forms without departing from the spirit or essential characteristics thereof. The embodiments disclosed in this application are to be considered as illustrative and not limiting. The scope of the invention is indicated by the appended claims rather than by the foregoing description, and all changes which come within the meaning and range of equivalency of the claims are intended to be embraced therein.

**Claims**

1. Polypropylene resin expanded particles comprising a base resin that comprises a polypropylene resin as a main component,

   wherein the polypropylene resin expanded particles have a single melting peak in a temperature range from 130°C to 170°C and a melting heat amount in the temperature range from 130°C to 170°C of 90% or more of a total melting heat amount in first heating in differential scanning calorimetry,
   the polypropylene resin expanded particles have a melting point Tm2 of 159°C or higher and 170°C or lower, the melting point Tm2 being a melting peak value in second heating in differential scanning calorimetry,
   the polypropylene resin expanded particles have a melt fracture speed at 200°C of 5 m/minute or more and 45 m/minute or less, and
   the polypropylene resin expanded particles have an open cell ratio of 15% or less.

2. The polypropylene resin expanded particles according to claim 1, wherein the polypropylene resin expanded particles have a melt flow rate of 1 g/10 minutes or more and 10 g/10 minutes or less.

3. The polypropylene resin expanded particles according to claim 1 or 2, wherein the polypropylene resin comprises 60 mass% or more and 100 mass% or less of a polypropylene resin having a branched structure.

4. The polypropylene resin expanded particles according to claim 3, wherein the polypropylene resin having a branched structure has a melt tension of more than 13.8 cN and a loss tangent tan$\delta$ of less than 3.3.

5. A method for producing the polypropylene resin expanded particles according to any one of claims 1 to 4, comprising:

   melt-kneading a base resin comprising a polypropylene resin as a main component and a blowing agent and extruding the melt; and
   cutting the extruded melt to obtain polypropylene resin expanded particles,
   wherein the melt-kneading comprises a first stage and a second stage, and
   a temperature of the second stage is lower than a temperature of the first stage.

6. The method according to claim 5, wherein the temperature of the first stage is (Tm2 + 20°C) or higher and (Tm2 + 70°C) or lower, and the temperature of the second stage is (Tm2 - 5°C) or higher and (Tm2 + 40°C) or lower.

7. The method according to claim 5 or 6, wherein the blowing agent is at least one selected from the group consisting of inorganic gas and water.

8. A polypropylene resin foam molded article comprising the polypropylene resin expanded particles according to any one of claims 1 to 4.

9. The polypropylene resin foam molded article according to claim 8, wherein the polypropylene resin foam molded article has a shrinkage ratio at 140°C of -2.0% or more and 1.0% or less.

FIG. 1

FIG. 2

## INTERNATIONAL SEARCH REPORT

| International application No. |
| --- |
| PCT/JP2020/042567 |

**A.  CLASSIFICATION OF SUBJECT MATTER**

C08J 9/16(2006.01)i; C08F 10/06(2006.01)i; C08L 23/00(2006.01)i
FI: C08J9/16 CES; C08L23/00; C08F10/06

According to International Patent Classification (IPC) or to both national classification and IPC

**B.  FIELDS SEARCHED**

Minimum documentation searched (classification system followed by classification symbols)
C08J9/00-9/42; C08F6/00-246/00; 301/00; C08K3/00-13/08; C08L1/00-101/14

Documentation searched other than minimum documentation to the extent that such documents are included in the fields searched

| | |
| --- | --- |
| Published examined utility model applications of Japan | 1922-1996 |
| Published unexamined utility model applications of Japan | 1971-2021 |
| Registered utility model specifications of Japan | 1996-2021 |
| Published registered utility model applications of Japan | 1994-2021 |

Electronic data base consulted during the international search (name of data base and, where practicable, search terms used)

**C.  DOCUMENTS CONSIDERED TO BE RELEVANT**

| Category* | Citation of document, with indication, where appropriate, of the relevant passages | Relevant to claim No. |
| --- | --- | --- |
| A | WO 2018/016399 A1 (KANEKA CORP.) 25 January 2018 (2018-01-25) claims 1-10, paragraphs [0017], [0085]-[0093] | 1-9 |
| A | WO 2014/084165 A1 (KANEKA CORP.) 05 June 2014 (2014-06-05) claims 1-8, 11-14, paragraphs [0107]-[0120] | 1-9 |
| A | JP 2005-41209 A (SUMITOMO CHEMICAL CO., LTD.) 17 February 2005 (2005-02-17) claim 1, paragraphs [0006], [0009]-[0014], [0027]-[0043] | 1-9 |
| A | JP 6-234878 A (HIMONT INC.) 23 August 1994 (1994-08-23) claims 1-5, paragraphs [0001], [0004]-[0009], [0014]-[0017] | 1-9 |

☒  Further documents are listed in the continuation of Box C.  ☒  See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 06 January 2021 (06.01.2021) | 19 January 2021 (19.01.2021) |

| Name and mailing address of the ISA/ | Authorized officer |
| --- | --- |
| Japan Patent Office 3-4-3, Kasumigaseki, Chiyoda-ku, Tokyo 100-8915, Japan | |
| | Telephone No. |

Form PCT/ISA/210 (second sheet) (January 2015)

24

**INTERNATIONAL SEARCH REPORT**

International application No.

PCT/JP2020/042567

C (Continuation). DOCUMENTS CONSIDERED TO BE RELEVANT

| Category* | Citation of document, with indication, where appropriate, of the relevant passages | Relevant to claim No. |
|---|---|---|
| A | JP 9-111034 A (SEKISUI KASEI CO., LTD.) 28 April 1997 (1997-04-28) claims 1, 5, paragraphs [0006]-[0007], [0010], [0012]-[0013] | 1-9 |
| A | JP 4-363227 A (JSP CO., LTD.) 16 December 1992 (1992-12-16) claims 1, 7, paragraphs [0004]-[0005], [0007]-[0008], [0017]-[0019] | 1-9 |

Form PCT/ISA/210 (continuation of second sheet) (January 2015)

**INTERNATIONAL SEARCH REPORT**
Information on patent family members

International application No.

PCT/JP2020/042567

| Patent Documents referred in the Report | Publication Date | Patent Family | Publication Date |
|---|---|---|---|
| WO 2018/016399 A1 | 25 Jan. 2018 | US 2019/0153188 A1<br>claims 1-10,<br>paragraphs [0021],<br>[0110]-[0122], tables<br>1-3<br>EP 3489287 A1<br>CN 109476868 A | |
| WO 2014/084165 A1 | 05 Jun. 2014 | US 2015/0284526 A1<br>claims 1-8, 11-14,<br>paragraphs [0200]-<br>[0225], tables 1-2<br>EP 2927270 A1<br>CN 104797643 A | |
| JP 2005-41209 A | 17 Feb. 2005 | US 2005/0004244 A1<br>claim 1, paragraphs<br>[0002], [0019]-<br>[0027], [0059]-<br>[0118], tables 1-2<br>CN 1576300 A | |
| JP 6-234878 A | 23 Aug. 1994 | US 5338764 A<br>claims 1-3, column 1,<br>lines 12-21, column<br>2, line 13 to column<br>4, line 50, column 6,<br>line 3 to column 8,<br>line 19<br>EP 588321 A1<br>CN 1087573 A | |
| JP 9-111034 A | 28 Apr. 1997 | (Family: none) | |
| JP 4-363227 A | 16 Dec. 1992 | (Family: none) | |

Form PCT/ISA/210 (patent family annex) (January 2015)

**EP 4 063 441 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2009051035 A1
- WO 2017030124 A1
- WO 2018016399 A1
- JP 2003313353 A
- JP 2007308560 A
- JP S5122951 A
- JP S5333996 A